# EUROPEAN PATENT APPLICATION

(11) **EP 4 465 035 A1**
(43) Date of publication of application: **20.11.2024**
(21) Application number: 22920486.2
(22) Date of filing: 30.11.2022
(51) Int. Cl.: G01N 27/407, G01N 27/28, G01N 27/416

(54) **ELECTROCHEMICAL GAS SENSOR, ELECTRONIC APPARATUS, GAS FILTER, METHOD FOR MANUFACTURING GAS FILTER, AND METHOD FOR MANUFACTURING ELECTROCHEMICAL GAS SENSOR**

(30) Priority: 14.01.2022 JP 2022004253
(71) Applicant: Panasonic Intellectual Property Management Co., Ltd., Osaka-shi, Osaka 540-6207 (JP)
(72) Inventor: SHIGENO, Hiroki, Kadoma-shi, Osaka 571-0057 (JP); TAMURA, Satoru, Kadoma-shi, Osaka 571-0057 (JP); FURUTA, Tsutomu, Kadoma-shi, Osaka 571-0057 (JP); OHTANI, Yuya, Kadoma-shi, Osaka 571-0057 (JP); WATANABE, Akifumi, Kadoma-shi, Osaka 571-0057 (JP)
(74) Representative: Müller-Boré & Partner Patentanwälte PartG mbB
(86) International application number: PCT/JP2022/044290
(87) International publication number: WO 2023/135966

(57) **Abstract**

The present disclosure provides an electrochemical gas sensor including a gas filter configured to, when applied to a gas sensor, enhance durability of the gas sensor in a dry atmosphere and downsize the gas sensor. An electrochemical gas sensor(10) according to the present disclosure includes a sensing unit (2) of electrochemical type and a gas filter (1) through which a gas to be supplied to the sensing unit (2) passes. The gas filter (1) is a porous membrane which has a surface having hydrophobicity and which has a micropore diameter of less than 100 nm.

## Description

### Technical Field

The present disclosure relates to electrochemical gas sensors, electronic apparatuses, gas filters, methods for manufacturing the gas filters, and methods for manufacturing the electrochemical gas sensors and specifically relates to an electrochemical gas sensor including a gas filter, an electronic apparatus including the electrochemical gas sensor, a gas filter suitable for application to the electrochemical gas sensor, a method for manufacturing the gas filter, and a method for manufacturing the electrochemical gas sensor.

### Background Art

Patent Literature 1 describes an electrochemical gas sensor including a polymer solid electrolyte membrane, a detection electrode in contact with the solid electrolyte membrane, a counter electrode in contact with the solid electrolyte membrane and not in contact with the detection electrode, an electrically conductive and porous gas diffusion layer covering the detection electrode in an opposite side to the solid electrolyte membrane, and a filter, wherein the electrochemical gas sensor is not provided with a water-reservoir, and wherein the gas diffusion layer or the filter is hydrophilic.

According to the description of Patent Literature 1, the technique described in Patent Literature 1 is, for the electrochemical gas sensor which is provided with no water-reservoir and whose sensitivity therefore tends to decrease in a dry atmosphere due to, for example, a decrease in conductivity of the polymer solid electrolyte, making the gas diffusion layer or the filter hydrophilic to improve durability in the dry atmosphere.

### Citation List

### Patent Literature

Patent Literature 1: JP 6644445 B2

### Summary of Invention

It is an object of the present disclosure to provide: an electrochemical gas sensor including a gas filter configured to increase durability of a gas sensor in a dry atmosphere and downsize the gas sensor; an electronic apparatus including the electrochemical gas sensor; the gas filter configured to, when applied to the gas sensor, increase the durability of the gas sensor in the dry atmosphere and downsize the gas sensor; a method for manufacturing the gas filter; and a method for manufacturing the electrochemical gas sensor.

An electrochemical gas sensor according to an aspect of the present disclosure includes a sensing unit of electrochemical type and a gas filter through which a gas to be supplied to the sensing unit passes. The gas filter is a porous membrane which has a surface having hydrophobicity and which has a micropore diameter of less than 100 nm.

An electronic apparatus according to an aspect of the present disclosure includes the electrochemical gas sensor.

A gas filter according to an aspect of the present disclosure is a porous membrane which has a surface having hydrophobicity and which has a micropore diameter of less than 100 nm.

A method for manufacturing a gas filter according to an aspect of the present disclosure is a method for manufacturing a gas filter in an electrochemical gas sensor including the gas filter. The electrochemical gas sensor includes a sensing unit of electrochemical type, a gas filter through which a gas to be supplied to the sensing unit passes, and a pathway through which the gas to be supplied to the sensing unit passes, and the gas filter is a porous membrane which has a surface having hydrophobicity and which has a micropore diameter of less than 100 nm, and the gas filter is disposed to shield the pathway. The gas filter is manufactured by molding a composition such that the composition shields the pathway. The composition is flowable and is a raw material for the gas filter.

A manufacturing method of an electrochemical gas sensor according to an aspect of the present disclosure is a method for manufacturing an electrochemical gas sensor, and the electrochemical gas sensor includes a sensing unit of electrochemical type, a gas filter through which a gas to be supplied to the sensing unit passes, and a pathway through which the gas to be supplied to the sensing unit passes. The gas filter is a porous membrane which has a surface having hydrophobicity and which has a micropore diameter of less than 100 nm, and the gas filter is disposed to shield the pathway. The manufacturing method includes manufacturing the gas filter by molding a composition such that the composition shields the pathway. The composition is flowable and is a raw material for the gas filter.

### Brief Description of Drawings

FIG. 1 is a schematic view of an example of micropores having a co-continuous structure in a gas filter according to the present disclosure;
FIG. 2 is a schematic view of an example of micropores in the gas filter according to the present disclosure, the micropores penetrating the gas filter in a thickness direction defined with respect to the gas filter;
FIG. 3 is a schematic view of a surface of the gas filter according to the present disclosure, the surface having been subjected to silylation treatment;
FIG. 4 is a schematic view of a surface of the gas filter according to the present disclosure, a silane compound having been vapor-deposited onto the surface;
FIG. 5 is a sectional view of a gas filter including porous particles and a binder;
FIG. 6 is a scanning electron micrograph of a surface of the gas filter including the porous particles and the binder;
FIG. 7 is an enlarged view of a portion surrounded by the broken line of FIG. 6;
FIG. 8 is a scanning electron micrograph of a cross section of the gas filter including the porous particles and the binder;
FIG. 9 is an enlarged view of a portion surrounded by the broken line of FIG. 8;
FIG. 10 is a schematic sectional view of a gas filter and an electrochemical gas sensor of a first example of an embodiment of the present disclosure;
FIG. 11 is a schematic sectional view of a gas filter and an electrochemical gas sensor of a second example of the embodiment of the present disclosure;
FIG. 12 is a schematic sectional view of a gas filter and an electrochemical gas sensor of a third example of the embodiment of the present disclosure; and
FIG. 13 is a graph of a change with time of a sensitivity change rate of the electrochemical gas sensor in a dry atmosphere for each of Example 9, Comparative Example 4, and Reference Example.

### Description of Embodiments

An overview of the circumstances of how the inventors accomplished the present disclosure will be described.

According to an investigation by the inventors, the technique described in Patent Literature 1 (JP 6644445 B2) contributes to downsizing, and simplification of the structure, of the gas sensor in that the gas sensor is provided with no water-reservoir, but in order to satisfactorily supply moisture from a filter or the like to a solid electrolyte in a dry atmosphere, the size of the filter has to be increased by, for example, increasing the thickness of the filter, thereby increasing the amount of the moisture retained in the filter. Therefore, the technique leads to an increase in size of the gas sensor in that the filter has an increased size. Moreover, when the gas sensor is subjected to the dry atmosphere for a long time period, the filter is dehydrated, thereby leading to reduced sensitivity. Thus, such a method in which moisture is supplied from the water-reservoir or a hydrophilic filter is unsatisfactory to downsize the gas sensor and achieve long-term desiccation resistance. The inventors considered, as another method, retaining moisture in an interior of a sensor by a water vapor barrier filter so as not to allow the moisture to escape outside the sensor. However, the inventors confirmed that the water vapor barrier filter did not satisfactorily allow permeation of gases other than water vapor, and therefore, if the water vapor barrier filter were used without no change, a sensing target gas could no longer enter the gas sensor from outside. Therefore, a filter through which satisfactory permeation of the sensing target gas is allowed but no permeation of water vapor is allowed is in demand, but as far as the inventors searched, there is still no such filter that is simply applicable to a gas sensor without requiring a power supply or an operation such as an application of pressure.

Therefore, the inventors accomplished the present disclosure to provide a gas sensor including a gas filter configured to increase durability of the gas sensor in a dry atmosphere and downsize the gas sensor.

Note that the present disclosure was accomplished under the circumstances described above, but the circumstances described above are not to limit the scope of the present disclosure. The scope of the present disclosure is determined based on configurations in the present disclosure.

Embodiments of the present disclosure will be described below with reference to the drawings. Note that the embodiments described below each show a comprehensive or specific example. Numerical values, shapes, materials, constituent elements, disposition locations and connection configurations of the constituent elements, and the like shown in the embodiments described below are mere examples and are not intended to limit the present disclosure. Moreover, of the constituent elements in the embodiments described below, constituent element which are not recited in independent claims each showing the most significant concept will be described as optional components.

Note that the drawings are schematic and not representative of exact proportions or dimensions.

Moreover, in each of the drawings, substantially the same components are denoted by the same reference signs, and the redundant description thereof may be omitted or simplified.

A gas filter 1 according to the present embodiment is a porous membrane which has a surface having hydrophobicity and which has a micropore diameter of less than 100 nm. The surface of the gas filter 1 also includes inner faces of micropores in the gas filter 1. According to the present embodiment, the gas filter 1 can effectively suppress water vapor from passing through. This is presumably because the micropore diameter of the gas filter 1 is within the above-described range, and therefore, contributions of Knudsen diffusion and surface diffusion become large, and further, the surface of the gas filter 1 is hydrophobic, and therefore, the surface diffusion of water vapor is effectively suppressed.

At least part of the surface of the gas filter 1 is a surface having hydrophobicity. Of the surface of the gas filter 1, at least the inner faces of the micropores are preferably surfaces having hydrophobicity.

Note that the surface having hydrophobicity means that when the surface is preferably a smooth face, the water contact angle of this face is greater than or equal to 80°. The water contact angle is determined by: forming the smooth face from the same material as a material included in the surface of the gas filter 1; and measuring the water contact angle of this smooth face.

Moreover, the micropore diameter is measured, depending on its size, by an appropriate method of a mercury press fit method and a nitrogen adsorption method. For example, when the value of the micropore diameter is greater than or equal to 3 nm, the micropore diameter is a volume-based average micropore diameter measured by the mercury press fit method, and when the value of the micropore diameter is less than 3 nm, the micropore diameter is a volume-based average micropore diameter measured by the nitrogen adsorption method.

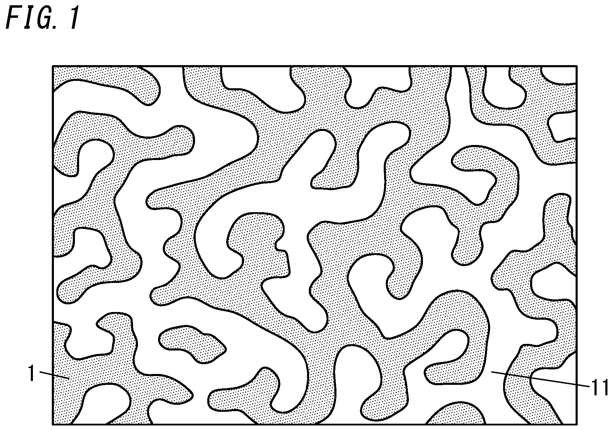

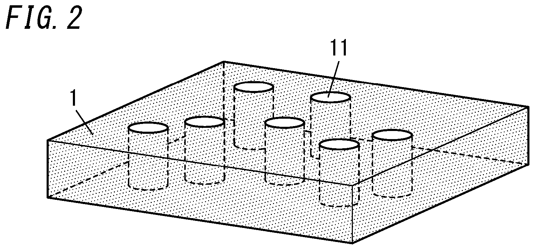

FIGS. 1 and 2 schematically show examples of micropores 11 in the gas filter 1. The micropores 11 in the gas filter 1 may have a co-continuous structure as shown in FIG. 1 or may have a cylindrical shape penetrating the gas filter 1 in a thickness direction defined with respect to the gas filter 1 as schematically shown in FIG. 2. Moreover, the gas filter 1 may have micropores 11 formed by stretching a material for the gas filter 1 to tear the material into small pieces. The structure of the micropores 11 in the gas filter 1 is not limited to this example, but the micropores 11 may have any appropriate structure.

In order that the gas filter 1 may more effectively suppress water vapor from passing through, the micropore diameter of the gas filter 1 is more preferably less than or equal to 80 nm, and much more preferably less than or equal to 60 nm. Moreover, the micropore diameter is preferably adjusted in accordance with the type of molecules which should be allowed to pass through the gas filter 1. For example, to allow carbon monoxide molecules to pass through the gas filter 1, the micropore diameter is preferably greater than or equal to 1 nm, and more preferably greater than or equal to 10 nm. In this case, the gas filter 1 can effectively suppress water vapor from passing through while selectively allowing the carbon monoxide to pass through. The gas filter 1 is, for example, a uniformly porous membrane. The configuration of the gas filter 1 in this case will be described.

The gas filter 1 is formed from, for example, a hydrophobic material. In this case, the gas filter 1 can have a surface having hydrophobicity.

The hydrophobic material preferably includes a fluorine-containing resin. The fluorine-containing resin contains at least one selected from the group consisting of, for example, polytetrafluoroethylene (PTFE), perfluoroalkoxy alkane (PFA), perfluoro ethylene propene copolymer (FEP), ethylene-tetrafluoroethylene copolymer (ETFE), polyvinylidene fluoride (PVDF), polychlorotrifluoroethylene (PCTFE), ethylene-chlorotrifluoroethylene copolymer (ECTFE), and polyvinyl fluoride (PVF). When the hydrophobic material includes the fluorine-containing resin, the gas filter 1 is, for example, a porous sheet formed from the fluorine-containing resin.

The surface of the gas filter 1 may have hydrophobicity imparted by hydrophobization treatment performed on the surface of the gas filter 1. In this case, the gas filter 1 is produced by, for example, subjecting a surface of a porous base member to the hydrophobization treatment. The surface of the porous base member also includes inner faces of micropores in the base member.

The porous base member may be produced from any appropriate material as long as the micropore diameter of the porous base member falls within a desired range and the surface of the porous base member can be subjected to the hydrophobization treatment. As long as a gas filter produced by subjecting the base member to the hydrophobization treatment comes to have a micropore diameter of less than 100 nm, the micropore diameter of the base member may be greater than or equal to 100 nm.

The base member is, for example, a sheet made of porous glass or a porous resin sheet. To produce the porous glass, for example, an original material made of glass is processed at a high temperature to induce phase dissociation, and then, one phase is eluted and removed from the original material, thereby obtaining the porous glass including the remaining phase.

The hydrophobization treatment is not particularly limited as long as it can make the surface of the base member hydrophobic. The hydrophobization treatment includes, for example, a process including silylation treatment, a process including a process of vapor-depositing a silane compound, or a process of disposing a water-repellent resin coating.

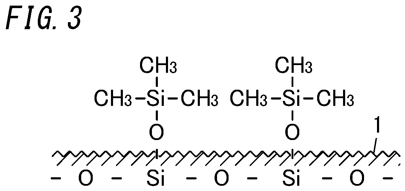

The silylation treatment is a process of introducing silyl groups by using a silylation agent into a surface of a base member. FIG. 3 schematically shows how a surface of a base member is made hydrophobic by the silylation agent. The silyl group is, for example, a trialkyl silyl group such as a trimethyl silyl group but is not limited to this example. That is, the silylation agent includes, for example, trialkyl silyl groups such as trimethyl silyl groups, but the silyl groups included in the silylation agent are not limited to this example. The silylation agent contains at least one selected from the group consisting of, for example, hexamethyldisilazane (HMDS), trimethylchlorosilane (TMCS), N-methyl-N-trimethylsilylacetamide (MTMSA), N-trimethylsilyldiethylamine (TMSDEA), N-trimethylsilyldimethylamine (TMSDMA), N-methyl-N-trimethylsilyl trifluoroacetamide (MSTFA), N,O-bis(trimethylsilyl)acetamide (BSA), N,O-bis(trimethylsilyl)trifluoroacetamide (BSTFA), N-trimethylsilylimidazole (TMSI), ethyl dimethylchlorosilane, propyl dimethylchlorosilane, dodecyl dimethylchlorosilane, and phenyl dimethylchlorosilane. The silylation treatment is performed by, for example, immersing the base member in the silylation agent, then washing the base member, and further drying the base member. Performing the silylation treatment can make the surface of the base member hydrophobic without significantly changing the micropore diameter of the base member and can silylate the inner faces of the micropores in the base member.

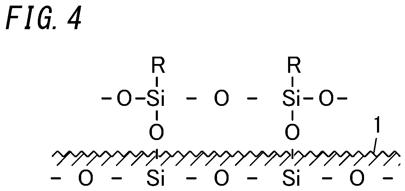

The process of vapor-depositing the silane compound is a process of vapor-depositing the silane compound onto the surface of the base member to deposit the silane compound on the surface of the base member, thereby introducing hydrophobic groups (R) derived from the silane compound into the surface of the base member. FIG. 4 schematically shows how the surface of the base member is made hydrophobic by the process of vapor-depositing the silane compound. The hydrophobic group (R) is, for example, an alkyl group or an alkyl fluoride group. That is, the silane compound preferably includes an alkyl group or an alkyl fluoride group bonded to a silicon atom. Moreover, the silane compound preferably includes an alkoxy group. In this case, the alkoxy group of the silane compound deposited on the base member reacts with the surface of the base member to bind to the base member, thereby maintaining the hydrophobicity of the surface of the gas filter 1 for a long period. The silane compound preferably includes at least two alkoxy groups, and more preferably includes three alkoxy groups. In this case, not only the alkoxy groups of the silane compound react with the surface of the base member so that the silane compound binds to the base member, but also silane compounds can be bonded to each other by the reaction between the alkoxy groups. Therefore, the hydrophobicity of the surface of the gas filter 1 is maintained for a longer period, that is, the durability of the gas filter 1 is further increased. The silane compound contains at least one selected from the group consisting of, for example, methyltrimethoxysilane, methyltriethoxysilane, ethyltrimethoxysilane, ethyltriethoxysilane, propyltrimethoxysilane, propyltriethoxysilane, hexyltrimethoxysilane, octyltrimethoxysilane, decyltrimethoxysilane, dodecyltrimethoxysilane, hexadecyltrimethoxysilane, octadecyltrimethoxysilane, phenyltrimethoxysilane, (3,3,3-trifluoropropyl)trimethoxysilane, trimethoxy(1H,1H,2H,2H-nonafluorohexyl)silane, trimethoxy(1H,1H,2H,2H-tridecafluoro-n-octyl)silane, and trimethoxy(1H,1H,2H,2H-heptadecafluorodecyl)silane. The vapor deposition of the silane compound is performed by, for example, heating the hermetically closed container in which the base member and the silane compound have been put.

The amount of time for which the process of vapor-depositing the silane compound is performed is adjusted, in accordance with a surface area and the like of the base member which is a process target, such that the gas filter 1 can effectively suppress water vapor from passing through and the chances of excessively inhibiting passing of molecules which should be allowed to pass through the gas filter 1 are reduced. The amount of tine for which the vapor-deposition process is performed is preferably longer than 0 minutes and shorter than or equal to 24 hours, more preferably longer than or equal to 1 minute and shorter than or equal to 12 hours, and much more preferably longer than or equal to 5 minutes and shorter than or equal to 6 hours. A temperature at which the process of vapor-depositing the silane compound is performed is adjusted in accordance with the type of the silane compound but to uniformly form a membrane, the temperature is preferably lower than the boiling point of the silane compound. Adjusting the amount of time and the temperature for the process can also adjust the micropore diameter of the gas filter 1.

When the hydrophobization treatment includes the process of providing the water-repellent resin coating, a resin coating is produced from, for example, a fluorine-containing resin or a resin such as silicone. Note that a resin contained in the resin coating is not limited to these examples. The water-repellent resin coating includes, for example, a fluorine-containing group or a silicone-containing group at its surface, thereby exhibiting a water-repellent property. The resin coating including the fluorine-containing group or the silicone-containing group at its surface is confirmed by, for example, energy dispersive X-ray spectroscopy (EDX). The water-repellent resin coating is produced by, for example, applying, onto the base member, a coating solution including a fluorine-containing resin or a resin such as silicone by a method such as dip coating, die coating, bar coating, spray coating, or spin coating. To cause the coating solution to enter the micropores in the base member, the dip coating is more preferable. When the water-repellent resin coating is provided, adjusting the amount of the coating solution applied onto the base member can also adjust the micropore diameter in the gas filter 1.

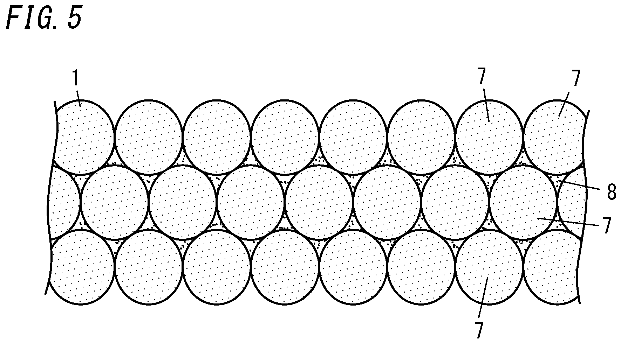

As shown in FIG. 5, the gas filter 1 may be a membrane including: a plurality of porous particles 7 each having a hydrophobic surface and a micropore diameter of less than 100 nm; and a binder 8 gathering, and binding to each other, the plurality of porous particles 7. The configuration of the gas filter 1 in this case will be described.

Each of the porous particles 7 can have the hydrophobic surface by, for example, being formed from a hydrophobic material.

The hydrophobic material preferably includes a fluorine-containing resin. The fluorine-containing resin contains at least one selected from the group consisting of, for example, polytetrafluoroethylene (PTFE), perfluoroalkoxy alkane (PFA), perfluoro ethylene propene copolymer (FEP), ethylene-tetrafluoroethylene copolymer (ETFE), polyvinylidene fluoride (PVDF), polychlorotrifluoroethylene (PCTFE), ethylene-chlorotrifluoroethylene copolymer (ECTFE), and polyvinyl fluoride (PVF).

Porous particles each having no hydrophobic surface (hereinafter referred to as raw material particles) may be subjected to hydrophobization treatment, thereby obtaining the porous particles 7 each having the hydrophobic surface. The raw material particles in this case may be produced from any appropriate material as long as the micropore diameter of the porous base member falls within a desired range and the surface of the porous base member can be subjected to the hydrophobization treatment. As long as the porous particles 7 produced by subjecting the raw material particles to the hydrophobization treatment comes to have a micropore diameter of less than 100 nm, the micropore diameter of the raw material particles may be greater than or equal to 100 nm.

The raw material particles are, for example, porous glass particles or porous resin particles.

The hydrophobization treatment is not particularly limited as long as it can make the surfaces of the raw material particles hydrophobic. The hydrophobization treatment includes, for example, a process including silylation treatment, a process including a process of vapor-depositing a silane compound, or a process of disposing a water-repellent resin coating. The details of these processes are as already described.

The average particle diameter of the porous particles 7 is, for example, greater than or equal to 1 µm and less than or equal to 100 µm but is not limited to this example. Note that the average particle diameter is an arithmetic mean diameter calculated from a volumetric particle size distribution measured by a laser diffraction/scattering method.

The binder 8 contains at least one of, for example, a cured material of a reactive curing compound or a thermoplastic resin. The reactive curing compound contains at least one selected from the group consisting of, for example, an epoxy resin, a phenol resin, a melamine resin, an unsaturated polyester resin, and an acryl compound. The reactive curing compound may further contain a curing agent or a polymerization initiator as necessary. The thermoplastic resin contains at least one selected from the group consisting of, for example, an acrylic resin, polyethylene, polypropylene, polystyrene, polyurethane, and polytetrafluoroethylene. The binder 8 is not limited to these examples.

In the gas filter 1 including the porous particles 7 and the binder 8, the surfaces of the porous particles 7 are preferably partially exposed at each of surfaces of the gas filter 1 which faces away from each other in a thickness direction defined with respect to the gas filter 1. Moreover, in the gas filter 1, adjacent porous particles 7, in particular, porous particles 7 adjacent to each other in the thickness direction, are preferably in contact with each other. In this case, in the gas filter 1, a flow of a gas in the thickness direction defined with respect to the gas filter 1 can stably be secured.

The proportion of the porous particles 7 and the binder 8 in the gas filter 1 is accordingly adjusted such that the flow of the gas in the gas filter 1 is secured by the porous particles 7 and the porous particles 7 are satisfactorily bonded to each other by the binder 8. For example, the proportion of the porous particles 7 to the sum of the porous particles 7 and the binder 8 is greater than or equal to 25% by mass and less than or equal to 85% by mass.

The gas filter 1 including the porous particles 7 and the binder 8 is manufactured by, for example, molding a flowable composition which is a raw material for the gas filter 1 (hereinafter also referred to as a raw material composition). The raw material composition may have flowability at an ordinary temperature or may have flowability by being heated. The raw material composition contains, for example, the porous particles 7 and a resin material which is a raw material for the binder 8. For example, when the binder 8 is a cured material of a reactive curing compound, the resin material contains the above-described reactive curing compound. Moreover, for example, when the binder 8 is a thermoplastic resin, the resin material contains the above-described thermoplastic resin. When the resin material contains a reactive curing compound, the gas filter 1 can be manufactured, for example, by molding the raw material composition by application or the like into, for example, a membrane shape, and subsequently, curing the reactive curing compound by an appropriate method according to the type of the reactive curing compound. For example, when the reactive curing compound has a heat-curable property, heating the raw material composition can cure the raw material composition. For example, when the reactive curing compound has a photocurable property, exposing the raw material composition to light can cure the raw material composition. Moreover, when the resin material includes a thermoplastic resin, the gas filter 1 can be manufactured by, for example, heating the raw material composition to be softened or melted to be flowable, molding the raw material composition having the flowability by application or the like into, for example, a membrane shape, and subsequently, solidifying the raw material composition by cooling.

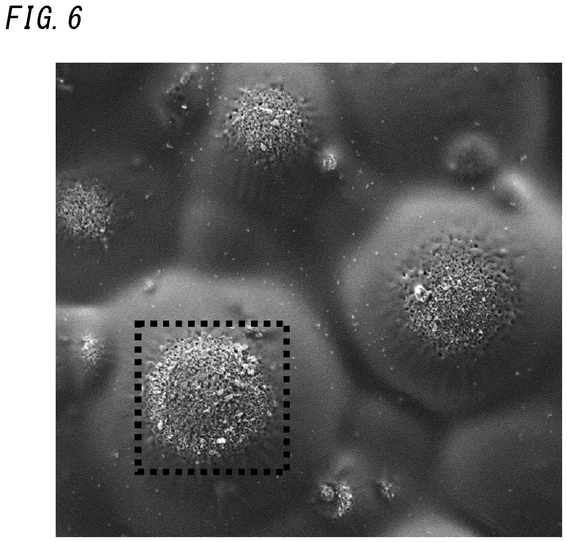

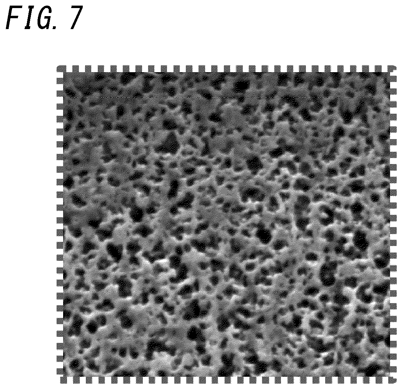

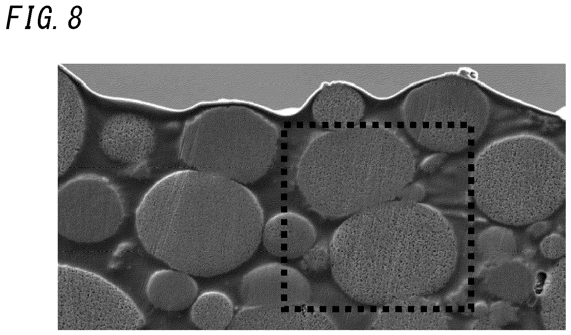

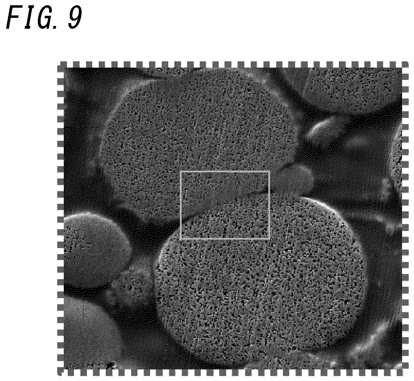

FIGS. 6 to 9 are scanning electron micrographs of an actually manufactured gas filter 1 including the porous particles 7 and the binder 8. The gas filter 1 was manufactured by heating a raw material composition, then molding the raw material composition into a membrane shape, and subsequently cooling the raw material composition. The raw material composition contains: porous glass particles which have been subjected to silylation treatment using trimethylchlorosilane and which have an average particle diameter of 10 µm and a micropore diameter of 50 nm; and an acrylic resin. The proportion of the porous glass particles in the raw material composition is 33% by mass. FIG. 6 is a scanning electron micrograph of a surface facing in the thickness direction defined with respect to the gas filter 1. It is observed that the surfaces of the porous glass particles are partially exposed (see the portion surrounded by a broken line in the figure). FIG. 7 is an enlarged view of the portion surrounded by the broken line of FIG. 6. It is observed that the micropores in the porous glass particle have openings at the surface. FIG. 8 is a scanning electron micrograph of a cross section parallel to the thickness direction defined with respect to the gas filter 1, and FIG. 9 is an enlarged view of the portion surrounded by a broken line of FIG. 8. It is observed that the porous glass particles adjacent to each other in the thickness direction are in contact with each other.

The thickness of the gas filter 1 is preferably greater than or equal to 0.1 mm. In this case, the gas filter 1 can be more effectively suppress water vapor from passing through. The thickness of the gas filter 1 is more preferably greater than or equal to 0.2 mm, and much more preferably greater than or equal to 0.5 mm. Moreover, the thickness of the gas filter 1 is preferably less than or equal to 2 mm. In this case, the gas filter 1 can be further downsized, and the chances of inhibiting passing of molecules which should be allowed to pass through the gas filter 1 are low. The thickness of the gas filter 1 is more preferably less than or equal to 1.5 mm, and much more preferably less than or equal to 1 mm.

The gas filter 1 according to the present embodiment is suitable for use in gas sensors and is, in particular, suitable for use in an electrochemical gas sensor 10. Note that the gas filter 1 according to the present embodiment is applicable to various applications, which can utilize the characteristics of the gas filter 1, other than the gas sensors.

The electrochemical gas sensor 10 including the gas filter 1 will be described.

The electrochemical gas sensor 10 includes: a sensing unit 2 of electrochemical type; and the gas filter 1 through which a gas to be supplied to the sensing unit 2 passes.

The sensing unit 2 of electrochemical type detects detection target molecules in a gas by an electrochemical reaction mediated by water. Therefore, if the sensing unit 2 dehydrates in a dry atmosphere and water in the sensing unit 2 becomes insufficient, the sensitivity of the electrochemical gas sensor 10 decreases. In addition, it is known that when the sensing unit 2 dehydrates, ion conductivity decreases, and this can be a factor of a reduction in the sensitivity.

In the present embodiment, however, water vapor is suppressed from passing through the gas filter 1, and therefore, an outflow of water from the sensing unit 2 is suppressed. Thus, even in the dry atmosphere, the electrochemical gas sensor 10 can have high durability.

Moreover, the present embodiment enables the durability of the electrochemical gas sensor 10 in a dry atmosphere to be enhanced without requiring a water-reservoir, thereby downsizing the electrochemical gas sensor 10. Moreover, the gas filter 1 according to the present embodiment enables the durability of the electrochemical gas sensor 10 to be enhanced even when the thickness of gas filter 1 is relatively small, thereby further downsizing, and reducing the thickness of, the electrochemical gas sensor 10.

The configuration of the electrochemical gas sensor 10 will be described more specifically.

First of all, the sensing unit 2 of electrochemical type will be described. The sensing unit 2 is a component configured to react with detection target molecules to cause an electrochemical reaction in which the detection target molecules are involved. The sensing unit 2 includes, for example, a detection electrode 21, a counter electrode 22, and a conductor 23. Each of the detection electrode 21 and the counter electrode 22 is in contact with the conductor 23, and the detection electrode 21 is not in contact with the counter electrode 22. For example, in the sensing unit 2, the detection electrode 21, the conductor 23, and the counter electrode 22 are stacked in this order. The conductor 23 has, for example, a membrane shape. The conductor 23 is produced from, for example, an ion-conductive solid electrolyte, and is produced from, for example, an ion-conductive polymer. Each of the detection electrode 21 and the counter electrode 22 is, for example, an electrode including a catalyst such as a noble metal catalyst. Each of the detection electrode 21 and the counter electrode 22 contains a solid electrolyte as necessary. When the electrochemical gas sensor 10 is a carbon monoxide gas sensor, the sensing unit 2 operates to detect carbon monoxide. In this case, in a state where the detection electrode 21 and the counter electrode 22 are connected to an external circuit and are short circuited, carbon monoxide is supplied to the detection electrode 21 of the sensing unit 2, and then, in the detection electrode 21, the electrode reaction described below proceeds between the carbon monoxide and water included in the detection electrode 21 or the conductor 23.

CO + H₂O → CO₂ + 2H⁺ + 2e⁻

Protons generated through this reaction are conducted in the conductor 23 and are supplied to the counter electrode 22. Thus, in the counter electrode 22, the electrode reaction described below proceeds between the protons and oxygen in the air.

2H⁺ + 1/2O₂ + 2e⁻ → H₂O

This generates an electromotive force in the sensing unit 2, thereby causing a current to flow to the external circuit. Measuring this current can detect the carbon monoxide.

In the electrochemical reaction, water included in the detection electrode 21 or the conductor 23 is involved, and therefore, when the water in the detection electrode 21 or the conductor 23 decreases, the sensitivity of the electrochemical gas sensor 10 may decrease. Moreover, the proton conductivity of the solid electrolyte decreases as the moisture content decreases, and therefore, when the water in the detection electrode 21 or the conductor 23 decreases, the sensitivity of the electrochemical gas sensor 10 may decrease. Moreover, when the conductor 23 dehydrates and consequently shrinks and deforms, each of the detection electrode 21 and the counter electrode 22 is more easily to peel off from the conductor 23, which may also reduce the sensitivity of the electrochemical gas sensor 10. However, in the present embodiment, using the gas filter 1 suppresses the sensitivity of the electrochemical gas sensor 10 from decreasing.

Next, an example of the structure of the electrochemical gas sensor 10 will be described.

The electrochemical gas sensor 10 includes the sensing unit 2 of electrochemical type; the gas filter 1 through which a gas to be supplied to the sensing unit 2 passes; and a pathway through which the gas to be supplied to the sensing unit 2 passes, and the gas filter 1 is disposed to shield the pathway through which the gas passes.

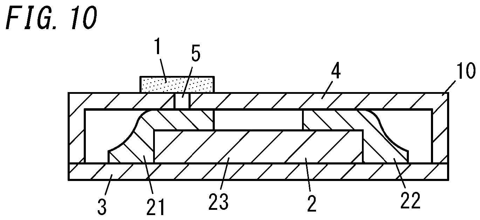

FIG. 10 schematically shows a first example of the electrochemical gas sensor 10. The electrochemical gas sensor 10 includes a substrate 3 including a conductor wire, a sensing unit 2 of electrochemical type disposed on the substrate 3, a lid body 4 attached to the substrate 3 and covering the sensing unit 2, an opening 5 in the lid body 4, and a gas filter 1 closing the opening 5. That is, the opening 5 configures a pathway through which a gas passes, and the pathway is shielded by the gas filter 1.

The substrate 3 is, for example, a printed wiring board.

The substrate 3 has one surface on which the sensing unit 2 is disposed. The sensing unit 2 includes: a conductor 23 disposed on the substrate 3; a detection electrode 21 electrically connected to the conductor wire of the substrate 3 and in contact with the conductor 23; and a counter electrode 22 electrically connected to the conductor wire of the substrate 3, in contact with the conductor 23, and not in contact with the detection electrode 21.

The lid body 4 is attached to the substrate 3 and covers the sensing unit 2, thereby shielding the sensing unit 2 from an outside. The lid body 4 has a portion in contact with the detection electrode 21, and the portion has an opening 5 via which the interior of the lid body 4 is communicated with the outside. That is, the opening 5 connects the detection electrode 21 to the outside. Thus, a gas outside the electrochemical gas sensor 10 can be supplied to the detection electrode 21 of the sensing unit 2 through the opening 5.

The lid body 4 is provided with the gas filter 1 covering the opening 5. Thus, the gas surrounding the electrochemical gas sensor 10 passes through the gas filter 1 and is then supplied to the detection electrode 21 of the sensing unit 2.

When the gas surrounding the electrochemical gas sensor 10 includes carbon monoxide, the carbon monoxide passes through the opening 5 formed in the lid body 4 and the gas filter 1 and is then supplied to the detection electrode 21 of the sensing unit 2. Thus, the carbon monoxide is detected.

Moreover, the gas filter 1 is configured to suppress water vapor from passing through, and therefore, water vapor in the electrochemical gas sensor 10 is suppressed from flowing out through the opening 5 formed in the lid body 4. Thus, even when the surroundings of the electrochemical gas sensor 10 are dry, the water vapor in the electrochemical gas sensor 10 is less likely to flow out, and therefore, water in the conductor 23 of the sensing unit 2 is less likely to decrease. Thus, the detection sensitivity of the electrochemical gas sensor 10 is suppressed from decreasing.

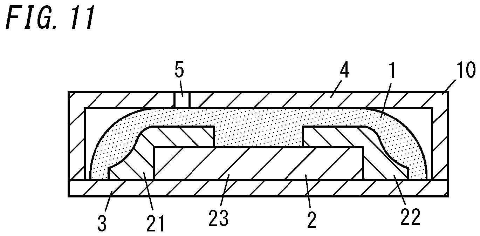

FIG. 11 schematically shows a second example of the electrochemical gas sensor 10. The electrochemical gas sensor 10 includes a substrate 3 including a conductor wire, a sensing unit 2 of electrochemical type disposed on the substrate 3, a lid body 4 attached to the substrate 3 and covering the sensing unit 2, an opening 5 in the lid body 4, and a gas filter 1 closing the opening 5. That is, a space in the lid body 4 (space between the lid body 4 and the sensing unit 2) and the opening 5 configures a pathway through which a gas passes, and the pathway is shielded by the gas filter 1.

The configurations of the substrate 3 and the sensing unit 2 are the same as those in the first example.

The gas filter 1 is in contact with the entirety of an outer surface, which is exposed outside, of the sensing unit 2, thereby covering the sensing unit 2.

The lid body 4 is attached to the substrate 3 and covers the sensing unit 2 and the gas filter 1, thereby shielding the sensing unit 2 from an outside. The lid body 4 has a portion in contact with the gas filter 1, and the portion has an opening 5 via which the interior of the lid body 4 is communicated with the outside. The opening 5 is located to face the detection electrode 21. That is, the opening 5 connects the detection electrode 21 to the outside. Thus, a gas outside the electrochemical gas sensor 10 can be supplied to the detection electrode 21 of the sensing unit 2 through the opening 5. Moreover, the gas filter 1 is interposed between the opening 5 and the detection electrode 21 to close the opening 5.

When a gas outside the electrochemical gas sensor 10 includes carbon monoxide, the carbon monoxide passes through the opening 5 formed in the lid body 4 and the gas filter 1 and is then supplied to the detection electrode 21 of the sensing unit 2. Thus, the carbon monoxide is detected.

Moreover, the gas filter 1 is configured to suppress water vapor from passing through, and therefore, water vapor in, and around, the sensing unit 2 is suppressed from flowing out through the opening 5 formed in the lid body 4. Thus, even when the outside of the electrochemical gas sensor 10 is dry, the water vapor in, and around, the sensing unit 2 is less likely to flow out of the electrochemical gas sensor 10, and therefore, water in the conductor 23 of the sensing unit 2 is less likely to decrease. Thus, the detection sensitivity of the electrochemical gas sensor 10 is suppressed from decreasing.

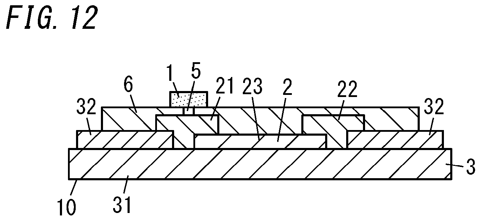

FIG. 12 schematically shows a third example of the electrochemical gas sensor 10. The electrochemical gas sensor 10 includes: a substrate 3 including an insulating layer 31 and a conductor wire 32; a sensing unit 2 of electrochemical type disposed on the substrate 3; a sealing material 6 sealing the sensing unit 2; an opening 5 in the sealing material 6; and a gas filter 1 closing the opening 5. That is, the opening 5 configures a pathway through which a gas passes, and the pathway is shielded by the gas filter 1.

The substrate 3 is, for example, a printed wiring board. In the substrate 3, the conductor wire 32 is disposed on the insulating layer 31.

The substrate 3 has one surface on which the sensing unit 2 is disposed. The sensing unit 2 includes: a conductor 23 disposed on the substrate 3; a detection electrode 21 electrically connected to the conductor wire 32 on the substrate 3 and in contact with the conductor 23; and a counter electrode 22 electrically connected to the conductor wire 32 on the substrate 3, in contact with the conductor 23, and not in contact with the detection electrode 21.

The detection electrode 21 and the counter electrode 22 are disposed on the one surface of the substrate 3 with a space therebetween. The conductor 23 is disposed on the one surface of the substrate 3 and is in contact with each of the detection electrode 21 and the counter electrode 22.

The sealing material 6 covers the sensing unit 2 such that the sealing material 6 is in contact with an outer surface, which is exposed outside, of the sensing unit 2, thereby shielding the sensing unit 2. The sealing material 6 is produced from, for example, an appropriate resin molded material. The sealing material 6 has the opening 5, and the opening 5 penetrates the sealing material 6 from an outer surface of the sealing material 6 through a surface of the detection electrode 21.

The gas filter 1 is disposed on the outer surface of the sealing material 6 to cover the opening 5.

Thus, in the electrochemical gas sensor 10, the opening 5 connects the detection electrode 21 to an outside. Thus, a gas surrounding the electrochemical gas sensor 10 can be supplied to the detection electrode 21 of the sensing unit 2 through the opening 5. Moreover, since the opening 5 is covered with the gas filter 1, the gas surrounding the electrochemical gas sensor 10 passes through the gas filter 1 and is then supplied to the detection electrode 21 of the sensing unit 2.

When the gas surrounding the electrochemical gas sensor 10 includes carbon monoxide, the carbon monoxide passes through the gas filter 1 and the opening 5 formed in the substrate 3 and is then supplied to the detection electrode 21 of the sensing unit 2. Thus, the carbon monoxide is detected.

Moreover, the gas filter 1 is configured to suppress water vapor from passing through, and therefore, water vapor in the electrochemical gas sensor 10 is suppressed from flowing out through the opening 5 formed in the substrate 3. Thus, even when the surroundings of the electrochemical gas sensor 10 are dry, the water vapor in the electrochemical gas sensor 10 is less likely to flow out, and therefore, water in the conductor 23 of the sensing unit 2 is less likely to decrease. Thus, the detection sensitivity of the electrochemical gas sensor 10 is suppressed from decreasing.

A method for manufacturing the gas filter 1 and the electrochemical gas sensor 10 will be described.

To manufacture the electrochemical gas sensor 10, the gas filter 1 is disposed to shield the pathway through which the gas to be supplied to the sensing unit 2 passes. The electrochemical gas sensor 10 is thus manufactured.

When the gas filter 1 is manufactured from a flowable composition which is a raw material for the gas filter 1, the composition is molded to shield the pathway through which the gas to be supplied to the sensing unit 2 passes, thereby manufacturing the gas filter 1 and the electrochemical gas sensor 10 including the gas filter 1. The flowable composition is, for example, a raw material composition which is employed to manufacture the gas filter 1 including the porous particles 7 and the binder 8 described above and which contains the porous particles 7 and a resin material which is a raw material for the binder 8. A method for manufacturing the gas filter 1 by molding the raw material composition is as already described.

For example, to manufacture the electrochemical gas sensor 10 of the first example shown in FIG. 5, for example, the sensing unit 2 is first disposed on one surface of the substrate 3, and subsequently, the lid body 4 having the opening 5 is attached to the substrate 3 to cover the sensing unit 2. Subsequently, the flowable composition is applied to an outer surface of the lid body 4 to have a membrane shape and to cover the opening 5, and further, the composition is cured as necessary. Thus, the gas filter 1 and the electrochemical gas sensor 10 including the gas filter 1 can be manufactured.

To manufacture the electrochemical gas sensor 10 of the second example shown in FIG. 6, the sensing unit 2 is first disposed on one surface of the substrate 3. Subsequently, the flowable composition is applied to have a membrane shape and to cover the entirety of an outer surface, which is exposed outside, of the sensing unit 2, and further, the composition is cured as necessary. Thus, the gas filter 1 is manufactured. Subsequently, the lid body 4 having the opening 5 is attached to the substrate 3 to cover the sensing unit 2 and the gas filter 1. Thus, the electrochemical gas sensor 10 can be manufactured.

To manufacture the electrochemical gas sensor 10 of the third example shown in FIG. 7, the sensing unit 2 is first disposed on one surface of the substrate 3. Subsequently, the sealing material 6 having the opening 5 is formed to be in contact with, and to cover, the entirety of the outer surface, which is expose outside, of the sensing unit 2. Subsequently, the flowable composition is applied to an outer surface of the sealing material 6 to have a membrane shape and to cover the opening 5, and further, the composition is cured as necessary. Thus, the gas filter 1 and the electrochemical gas sensor 10 including the gas filter 1 can be manufactured.

Note that the first example, the second example, and the third example of the electrochemical gas sensor 10 are merely some of various specific aspects of the electrochemical gas sensor 10, and the electrochemical gas sensor 10 may have various structures as long as it is configured such that the gas to be supplied to the sensing unit 2 passes through the gas filter 1.

The electronic apparatus according to the present embodiment includes the electrochemical gas sensor 10 according to the present embodiment. The electronic apparatus is, for example, a gas detection device. The gas detection device includes, for example, the electrochemical gas sensor 10 and a detection unit configured to detect an output of the sensing unit 2 in the electrochemical gas sensor 10. The detection unit is, for example, a circuit for detection configured to detect, based on the output of the sensing unit 2, a component which is a measurement target in a gas, or configured to further measure the concentration of the component in the gas. The gas detection device is configured as, for example, a gas alarm. Note that the electronic apparatus is not limited to the gas detection device as long as it utilizes a sensing result by the electrochemical gas sensor 10, and the electronic apparatus may be any appropriate apparatus.

### Examples

Specific examples of the present embodiment will be described below. Note that the present embodiment is not limited to the examples described below.

### 1. Production of Gas Filter

### (1) Examples 1 to 3

A porous glass plate (having a dimension of 20 mm × 20 mm in plan view and a thickness of 1 mm) manufactured by Akagawa Glass Co., Ltd. was prepared. In Example 1, the porous glass plate having a micropore diameter of 50 nm was prepared. In Example 2, the porous glass plate having a micropore diameter of 70 nm was prepared. In Example 3, the porous glass plate having a micropore diameter of 15 nm was prepared.

The porous glass plate was subjected to silylation treatment by immersing the porous glass plate in trimethylchlorosilane overnight, subsequently washing the porous glass plate with hexane, and then drying the porous glass plate. Thus, a gas filter was produced.

### (2) Example 4

The porous glass plate prepared in Example 1 was subjected to the silylation treatment by using, not trimethylchlorosilane, but ethyldimethylchlorosilane. Thus, a gas filter was prepared.

### (3) Example 5

A porous glass plate (having a dimension of 20 mm × 20 mm in plan view, a thickness of 1 mm, and a micropore diameter of 50 nm) manufactured by Akagawa Glass Co., Ltd and trimethoxy(1H,1H,2H,2H-heptadecafluorodecyl)silane put in a hermetically closed container were heated at 120°C for 20 minutes, and thereby, a silane compound was vapor-deposited onto the porous glass plate. Thus, a gas filter was produced.

### (4) Example 6

A gas filter was produced in the same method as that in Example 5 except that the amount of time the porous glass plate and trimethoxy(1H,1H,2H,2H-heptadecafluorodecyl)silane put in a hermetically closed container were heated was chanted to 1 hour.

### (5) Example 7

A gas filter was produced in the same method as that in Example 5 except that the amount of time the porous glass plate and trimethoxy(1H,1H,2H,2H-heptadecafluorodecyl)silane put in a hermetically closed container were heated was chanted to 5 hour.

### (6) Example 8

The porous glass prepared in Example 1 was immersed in a coating solution and was then dried at 140°C for 1 hour, thereby providing a resin coating. As the coating solution, a coating solution obtained by adding butyl acetate which is a solvent to a water-repelling coating MK-FSO-200 manufactured by Panasonic Environmental Systems & Engineerings Co., Ltd. and adjusting the solid content to 10% by mass was used. Thus, a gas filter was produced.

### (7) Comparative Examples 1-3

The porous glass plate prepared in each of Examples 1 to 3 was used as it was as a gas filter without performing the hydrophobization treatment.

### 2. Production of Electrochemical Gas Sensor

### (1) Example 9

As described below, an electrochemical gas sensor having the structure shown in FIG. 7 was produced for a test. A printed circuit board having a thickness of 1 mm was prepared, and on one surface of the printed circuit board, Nafion membrane 117 (having a thickness of 183 µm) which is a solid electrolyte membrane manufactured by Sigma-Aldrich Co. LLC was put as a conductor. Subsequently, each of a detection electrode and a counter electrode was produced to be in contact with a conductor wire and a conductor of the printed circuit board and such that the detection electrode and the counter electrode were not in contact with each other with a space therebetween. Each of the detection electrode and the counter electrode was produced by applying a composition to the printed circuit board and then drying the composition. The composition was prepared by mixing together catalyst TEC10E50E manufactured by Tanaka Kikinzoku Kogyo K. K., solid electrolyte dispersion solution DE2020 CS manufactured by FUJIFILM Wako Chemical Corporation, and water and ethanol as solvents. Further, a sealing resin was molded on one surface of the printed wiring board to produce a sealing material, and the detection electrode, the counter electrode, and the solid electrolyte membrane were sealed with the sealing material. In the sealing material, a hole extending from an outer surface of the sealing material through a surface of the detection electrode and having a diameter of 0.8 mm was formed. On the outer surface of the sealing material, the gas filter of Example 1 was disposed to cover the hole.

### (2) Comparative Example 4

In Example 9, the gas filter of Comparative Example 1 was employed in place of the gas filter of Example 1.

### (3) Reference Example

In Example 9, a gas sensor provided with no gas filter was prepared as an electrochemical gas sensor.

### 3. Evaluation

### (1) Water Contact Angle

The contact angle of a surface of the gas filter of each of Examples 1-8 and Comparative Examples 1-3 was determined by the following method.

A glass plate having a smooth surface was subjected to a surface process under the same condition as that in each of Examples 1 to 8. The water contact angle of the surface after the process was measured in compliance with JIS R3257 by using fully automatic contact angle meter DMo-701 manufactured by Kyowa Interface Science Co., Ltd.

Moreover, the water contact angle of a surface of a glass plate having a smooth surface was likewise measured. The water contact angle thus obtained was defined as the water contact angle of each of Comparative Examples 1-3.

The results are shown in Table 1.

### (2) Evaluation of Gas Filter

The carbon monoxide permeation speed and the water vapor permeation speed of the gas filter of each of Examples 1-8 and Comparative Examples 1-3 were measured by the following method.

### Carbon Monoxide Permeation Speed:

The permeation speed of the carbon monoxide through the gas filter was evaluated by the following method. As a gas permeation cell, each of a first chamber and a second chamber having an inner diameter of 50 mm and a length of 100 mm was used. Each of the first chamber and the second chamber was produced from an acryl plate having a thickness of 5 mm. Note that each chamber has an opening having a rim, and in a state where a packing is attached to the rim, a sample can be fixed between the openings of the two chambers. The sample was produced by: sandwiching a gas filter between two aluminum tapes each having a circular hole having a diameter of 16 mm; and affixing the two aluminum tapes to each other. Thus, the carbon monoxide permeation area of the gas filter was set to 2 cm². To the first chamber, a carbon monoxide gas cylinder was connected, and in the second chamber, carbon monoxide gas sensor NAP-508 manufactured by Nemoto Sensor Engineering Co., Ltd. was placed to be able to detect the carbon monoxide concentration in the second chamber at 1-second intervals. In this state, the sample was fixed between the two chambers. Into the first chamber, the carbon monoxide gas was introduced from the carbon monoxide gas cylinder such that the concentration of the carbon monoxide gas was 150 ppm, and a change in the carbon monoxide concentration in the second chamber was measurement by using the carbon monoxide gas sensor. From a measurement result until one minute had elapsed since the introduction of the carbon monoxide gas by the carbon monoxide gas sensor, the increase rate [ppm/s] of the carbon monoxide concentration in the second chamber was calculated by a least squares method and was defined as the carbon monoxide permeation speed.

### Water Vapor Permeation Speed:

The permeation speed of water vapor in the gas filter was evaluated by the following method. A cup having an inner diameter of 56 mm and a height of 32 mm was employed. The cup was produced from a stainless steel plate having a thickness of 1 mm. Note that to the rim of the cup, a packing and a hold-down lid can be attached to fix a sample. The sample was produced by: sandwiching a gas filter between two aluminum tapes each having a circular hole having a diameter of 16 mm; and affixing the two aluminum tapes to each other. Thus, the water vapor permeation area of the gas filter was set to 2 cm². In the cup, a plastic dish on which 10 g of calcium chloride had been placed was put, and the sample was then fixed to the cup, and in this state, an initial weight of the cup was measured. The cup was put in a constant temperature and humidity chamber under a temperature of 25°C and a humidity of 90% and was then taken out of the cup after 24 hours, and the weight of the cup was measured again. A difference between the measurement result of the weight and the initial weight was calculated, thereby obtaining an increment [g] in the weight of the calcium chloride in the cup from the initial weight. The increment in the weight was divided by 24, thereby calculating the water vapor permeation speed [g/h].

The results are as described below.

**[Table 1]**

| | Micropore Diameter | Hydrophobization Process | Water Contact Angle | Carbon Monoxide Permeation Speed [ppm/s] | Water Vapor Permeation Speed [g/h] | Overall Evaluation |
|---|---|---|---|---|---|---|
| Example 1 | 50 nm | Silylation (trimethylchlorosilane) | 83° | 0.019 | 0.006 | Good |
| Example 2 | 70 nm | Silylation (trimethylchlorosilane) | 83° | 0.016 | 0.003 | Good |
| Example 3 | 15 nm | Silylation (trimethylchlorosilane) | 83° | 0.032 | 0.005 | Good |
| Example 4 | 50 nm | Silylation (ethyldimethylchlorosilane) | 88° | 0.012 | 0.003 | Good |
| Example 5 | 50 nm | Vapor-Deposition (20 minutes) | 105° | 0.012 | 0.003 | Good |
| Example 6 | 50 nm | Vapor-Deposition (1 hour) | 102° | 0.009 | 0.002 | Good |
| Example 7 | 50 nm | Vapor-Deposition (5 hours) | 103° | 0.006 | 0.001 | Good |
| Example 8 | 50 nm | Resin Coating | 101° | 0.014 | 0.01 | Good |
| Comparative Example 1 | 50 nm | None | 41° | 0.012 | 0.027 | Poor |
| Comparative Example 2 | 70 nm | None | 41° | 0.01 | 0.034 | Poor |
| Comparative Example 3 | 15 nm | None | 41° | 0.038 | 0.023 | Poor |

As the results show, in the gas filter in each example, carbon monoxide permeability was highly maintained, and water vapor permeability was further reduced as compared with the gas filter in each comparative example.

This can confirm that the gas filter in each example suppresses the permeation of water vapor while having carbon monoxide permeability.

### (3) Evaluation of Electrochemical Gas Sensor

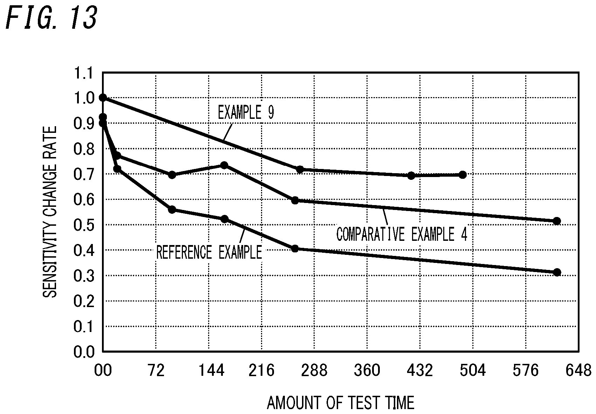

In a state where the electrochemical gas sensor in each of Example 9, Comparative Example 4, and Reference Example was placed in an atmosphere at a temperature of 25°C and a relative humidity of 10%, carbon monoxide was supplied to the atmosphere to adjust the carbon monoxide concentration in the atmosphere to 10 ppm. In this state, a short-circuit current following between the detection electrode and the counter electrode of the sensing unit of the electrochemical gas sensor was measured as an output of the electrochemical gas sensor. The output was continuously measured, and an output standardized with an initial output as 1 was defined as a sensitivity change rate. The results are shown in FIG. 13. In FIG. 13, the ordinate represents the sensitivity change rate, and the abscissa represents elapsed time.

As the results show, in the case of Example 9, the sensitivity change rate was less likely to decrease as compared with Comparative Example 4 and Reference Example. This confirms that in the electrochemical gas sensor in Example 9, the durability in the dry atmosphere was improved.

As can be seen from the embodiment and examples above, an electrochemical gas sensor (10) of a first aspect of the present disclosure includes: a sensing unit (2) of electrochemical type; and a gas filter (1) through which a gas to be supplied to the sensing unit (2) passes. The gas filter (1) is a porous membrane which has a surface having hydrophobicity and which has a micropore diameter of less than 100 nm.

The first aspect enables water vapor to be effectively suppressed from passing through the gas filter (1), thereby improving the durability of the electrochemical gas sensor(10) in a dry atmosphere and downsizing the electrochemical gas sensor(10).

In a second aspect of the present disclosure referring to the first aspect, the gas filter (1) is a uniformly porous membrane.

In a third aspect of the present disclosure referring to the first aspect, the gas filter (1) is a membrane including: a plurality of porous particles (7) each having a hydrophobic surface and a micropore diameter of less than 100 nm; and a binder (8) gathering, and binding to each other, the plurality of porous particles (7).

In a fourth aspect of the present disclosure referring to any one of the first to third aspects, the gas filter (1) is formed from a hydrophobic material.

The fourth aspect enables hydrophobicity to be imparted to the surface of the gas filter (1) by the hydrophobic material.

In a fifth aspect of the present disclosure referring to the fourth aspect, the hydrophobic material includes a fluorine-containing resin.

The fifth aspect enables the hydrophobicity of the surface of the gas filter (1) to be enhanced.

In a sixth aspect of the present disclosure referring to any one of the first to third aspects, the surface of the gas filter (1) has the hydrophobicity imparted by hydrophobization treatment.

The sixth aspect enables hydrophobicity to be imparted to the surface of the gas filter (1) by the hydrophobization treatment.

In a seventh aspect of the present disclosure referring to the sixth aspect, the hydrophobization treatment includes silylation treatment.

The seventh aspect enables hydrophobicity to be imparted to the surface of the gas filter (1) by the silylation treatment without significantly changing the micropore diameter.

In an eighth aspect of the present disclosure referring to the sixth aspect, the hydrophobization treatment includes a process of vapor-depositing a silane compound onto the surface of the gas filter (1).

The eighth aspect enables hydrophobicity to be imparted to the surface of the gas filter (1) by the vapor-deposition of the silane compound and enables the hydrophobicity to be maintained for a long time period.

In a ninth aspect of the present disclosure referring to the sixth aspect, the hydrophobization treatment includes a process of disposing a water-repellent resin coating.

The ninth aspect enables hydrophobicity to be imparted to the surface of the gas filter (1) by a water-repellent resin.

In a tenth aspect of the present disclosure referring to any one of the first to ninth aspects, the gas filter (1) has a thickness of greater than or equal to 0.1 mm and less than or equal to 2 mm.

The tenth aspect enables the gas filter (1) to effectively suppress permeation of water vapor.

An electronic apparatus of an eleventh aspect of the present disclosure includes the electrochemical gas sensor (10) of any one of the first to tenth aspects.

The eleventh aspect enables the gas filter (1) to improve the durability of the electrochemical gas sensor(10) in an electronic apparatus in a dry atmosphere and to downsize the electrochemical gas sensor(10).

A gas filter (1) of a twelfth aspect of the present disclosure is a porous membrane which has a surface having hydrophobicity and which has a micropore diameter of less than 100 nm.

The twelfth aspect enables water vapor to be effectively suppressed from passing through the gas filter (1), and therefore, applying the gas filter (1) to a gas sensor enables the durability of the gas sensor in a dry atmosphere to be enhanced and enables the gas sensor to be downsized.

In a thirteenth aspect of the present disclosure referring to the twelfth aspect, the gas filter (1) is used to allow a gas to be supplied to a sensing unit (2) of an electrochemical gas sensor(10) to pass through.

The thirteenth aspect enables the gas filter (1) to improve the durability of the electrochemical gas sensor(10) in a dry atmosphere and to downsize the electrochemical gas sensor(10).

In a fourteenth aspect of the present disclosure referring to the twelfth or thirteenth aspect, the gas filter (1) is a uniformly porous membrane.

In a fifteenth aspect of the present disclosure referring to the twelfth or thirteenth aspect, the gas filter (1) is a membrane including a plurality of porous particles (7) and a binder (8) gathering, and binding to each other, the plurality of porous particles (7).

A manufacturing method for a gas filter (1) of a sixteenth aspect of the present disclosure is a method for manufacturing a gas filter (1) in an electrochemical gas sensor(10) including the gas filter (1). The electrochemical gas sensor(10) includes a sensing unit (2) of electrochemical type, the gas filter (1) through which a gas to be supplied to the sensing unit (2) passes, and a pathway through which the gas to be supplied to the sensing unit (2) passes. The gas filter (1) is a porous membrane which has a surface having hydrophobicity and which has a micropore diameter of less than 100 nm, and the gas filter (1)is disposed to shield the pathway. The manufacturing method includes manufacturing the gas filter (1) by molding a composition such that the composition shields the pathway. The composition is flowable and is a raw material for the gas filter (1).

The sixteenth aspect enables water vapor to be effectively suppressed from passing through the gas filter (1), and therefore, applying the gas filter (1) to a gas sensor enables the durability of the gas sensor in a dry atmosphere to be enhanced and enables the gas sensor to be downsized.

In a seventeenth aspect of the present disclosure referring to the sixteenth aspect, the composition contains: a plurality of porous particles (7) each having a hydrophobic surface and a micropore diameter of less than 100 nm; and a resin material which is a raw material for a binder (8).

The seventeenth aspect enables a gas filter (1) to be manufactured which includes: the plurality of porous particles (7) each having a hydrophobic surface and a micropore diameter of less than 100 nm; and the binder (8) gathering, and binding to each other, the plurality of porous particles (7).

In a manufacturing method for an electrochemical gas sensor(10) of an eighteenth aspect of the present disclosure, the electrochemical gas sensor(10) includes: a sensing unit (2) of electrochemical type; a gas filter (1) through which a gas to be supplied to the sensing unit (2) passes; and a pathway through which the gas to be supplied to the sensing unit (2) passes. The gas filter (1) is a porous membrane which has a surface having hydrophobicity and which has a micropore diameter of less than 100 nm, and the gas filter (1) is disposed to shield the pathway. The manufacturing method includes manufacturing the gas filter (1) by molding a composition such that the composition shields the pathway. The composition is flowable and is a raw material for the gas filter (1).

The eighteenth aspect enables water vapor to be effectively suppressed from passing through the gas filter (1), thereby improving the durability of the electrochemical gas sensor(10) in a dry atmosphere and downsizing the electrochemical gas sensor(10).

In a nineteenth aspect referring to the eighteenth aspect, the composition contains: a plurality of porous particles (7) each having a hydrophobic surface and a micropore diameter of less than 100 nm; and a resin material which is a raw material for a binder (8).

The nineteenth aspect enables an electrochemical gas sensor(10) to be manufactured which includes a gas filter (1) including: a plurality of porous particles (7) each having a hydrophobic surface and a micropore diameter of less than 100 nm; and a binder (8) gathering, and binding to each other, the plurality of porous particles (7).

### Reference Signs List

- 1: Gas Filter
- 2: Sensing Unit
- 10: Electrochemical Gas Sensor

## Claims

1. An electrochemical gas sensor comprising:
a sensing unit of electrochemical type; and
a gas filter through which a gas to be supplied to the sensing unit passes,
the gas filter being a porous membrane which has a surface having hydrophobicity and which has a micropore diameter of less than 100 nm.

2. The electrochemical gas sensor of claim 1, wherein
the gas filter is a uniformly porous membrane.

3. The electrochemical gas sensor of claim 1, wherein
the gas filter is a membrane including:
a plurality of porous particles each having a hydrophobic surface and a micropore diameter of less than 100 nm; and
a binder gathering, and binding to each other, the plurality of porous particles.

4. The electrochemical gas sensor of claim 1, wherein
the gas filter is formed from a hydrophobic material.

5. The electrochemical gas sensor of claim 4, wherein
the hydrophobic material includes a fluorine-containing resin.

6. The electrochemical gas sensor of claim 1, wherein
the surface of the gas filter has the hydrophobicity imparted by hydrophobization treatment.

7. The electrochemical gas sensor of claim 6, wherein
the hydrophobization treatment includes silylation treatment.

8. The electrochemical gas sensor of claim 6, wherein
the hydrophobization treatment includes a process of vapor-depositing a silane compound onto the surface.

9. The electrochemical gas sensor of claim 6, wherein
the hydrophobization treatment includes a process of disposing a water-repellent resin coating.

10. The electrochemical gas sensor of any one of claims 1 to 9, wherein
the gas filter has a thickness of greater than or equal to 0.1 mm and less than or equal to 2 mm.

11. An electronic apparatus comprising the electrochemical gas sensor of any one of claims 1 to 9.

12. A gas filter being a porous membrane which has a surface having hydrophobicity and which has a micropore diameter of less than 100 nm.

13. The gas filter of claim 12, wherein
the gas filter is used to allow a gas to be supplied to a sensing unit of an electrochemical gas sensor to pass through.

14. The gas filter of claim 12 or 13, wherein
the gas filter is a uniformly porous membrane.

15. The gas filter of claim 12 or 13, wherein
the gas filter is a membrane including
a plurality of porous particles and
a binder gathering, and binding to each other, the plurality of porous particles.

16. A method for manufacturing a gas filter in an electrochemical gas sensor including the gas filter,
the electrochemical gas sensor including
a sensing unit of electrochemical type,
the gas filter through which a gas to be supplied to the sensing unit passes, and
a pathway through which the gas to be supplied to the sensing unit passes,
the gas filter being a porous membrane which has a surface having hydrophobicity and which has a micropore diameter of less than 100 nm, the gas filter being disposed to shield the pathway,
the method comprising manufacturing the gas filter by molding a composition such that the composition shields the pathway, the composition being flowable and being a raw material for the gas filter.

17. The method of claim 16, wherein
the composition includes:
a plurality of porous particles each having a hydrophobic surface and a micropore diameter of less than 100 nm; and
a resin material which is a raw material for a binder.

18. A method for manufacturing an electrochemical gas sensor,
the electrochemical gas sensor including
a sensing unit of electrochemical type,
a gas filter through which a gas to be supplied to the sensing unit passes, and
a pathway through which the gas to be supplied to the sensing unit passes,
the gas filter being a porous membrane which has a surface having hydrophobicity and which has a micropore diameter of less than 100 nm, the gas filter being disposed to shield the pathway,
the method comprising manufacturing the gas filter by molding a composition such that the composition shields the pathway, the composition being flowable and being a raw material for the gas filter.

19. The method of claim 18, wherein
the composition contains:
a plurality of porous particles each having a hydrophobic surface and a micropore diameter of less than 100 nm; and
a resin material which is a raw material for a binder.
